Europäisches Patentamt

European Patent Office

Office européen des brevets

(19)

(11) Numéro de publication: **0 394 566**

**A1**

(12) **DEMANDE DE BREVET EUROPEEN**

(21) Numéro de dépôt: **89201101.6**

(22) Date de dépôt: **28.04.89**

(51) Int. Cl.⁵: $G11B\ 7/24$, $G11B\ 7/00$

(43) Date de publication de la demande:
**31.10.90 Bulletin 90/44**

(84) Etats contractants désignés:
**AT BE CH DE ES FR GB GR IT LI LU NL SE**

(71) Demandeur: **DANISMAC S.A.**
**Boulevard de la Foire 30**
**L-1528 Luxembourg(LU)**

(72) Inventeur: **Laude, Lucien Diego**
**Rue des Lilas 64**
**F-59330 Hautmont(FR)**
Inventeur: **Hanus, Francoise**
**Rue des Rimahans 6**
**B-7040 Havre(BE)**

(74) Mandataire: **Schmitz, Yvon et al**
**Bureau Gevers S.A. rue de Livourne 7 bte 1**
**B-1050 Bruxelles(BE)**

(54) **Supports optiques d'information.**

(57) Support optique d'information comprenant un substrat (1) sous forme de plaque, deux couches superposées (2, 3) sur au moins une des deux faces du substrat (1), formant un film sensible à l'irradiation par un faisceau laser d'écriture et un faisceau laser de lecture, formées d'éléments distincts, synthétisant dans la zone d'irradiation un composé semi-conducteur permettant la lecture de l'information, ainsi qu'une couche de protection transparente (4) laissant passer le rayonnement laser sur la surface extérieure de la couche extérieure (3), le substrat (1) étant absorbant à la longueur d'onde du faisceau laser de lecture et le film sensible comprenant des trous optiques (5) (formés par la synthèse du composé semi-conducteur) à la longueur d'onde du faisceau laser de lecture, matérialisant des éléments d'écriture ou bits intégrés dans le film sensible entre le substrat absorbant (1) et la couche de protection (4).

Fig.1.

EP 0 394 566 A1

## Supports optiques d'information.

La présente invention est relative à des supports optiques d'information ainsi qu'à des ensembles formant supports optiques d'information.

L'archivage des informations ainsi que leur traitement demande un nombre toujours croissant de supports ainsi qu'une accessibilité toujours améliorée, c'est-à-dire une vitesse de traitement sans cesse accrue. Jusqu'en 1987, l'essentiel de l'archivage a été réalisé sur support magnétique. Les inconvénients et les limites de l'archivage magnétique sont connus : sensibilité à l'environnement (température, poussière, champ magnétique), principe de lecture très fragile, durée de vie limitée à trois ans.

Les techniques optiques apportent plusieurs solutions avantageuses. Elles se caractérisent en l'utilisation d'un faisceau laser comme outil à la fois d'écriture et de lecture. Grâce à des moyens appropriés, le faisceau laser est focalisé sur la surface d'un matériau où il produit une modification détectable de certaines de ses propriétés physiques. Cette modification localisée en la zone de focalisation du faisceau laser (par exemple sur un diamètre de 1 $\mu$m) constitue l'élément d'écriture (ou bit), qui doit être ensuite lu optiquement. La qualité de l'écriture optique peut être évaluée suivant deux paramètres qui sont, par ordre d'importance :

a) le contraste optique, tel qu'obtenu en mesurant la différence entre les réflectivités des zones irradiées par le laser d'une part, et le reste du matériau d'autre part;

b) la stabilité morphologique et géométrique de ces zones irradiées.

Le premier paramètre (contraste) définit la qualité intrinsèque du procédé d'écriture optique, le second paramètre (stabilité) déterminant sa durée de vie. Le contraste est primordial puisqu'il influence directement le mode de lecture : au plus grand est le contraste, au plus court est le temps d'accès à l'information et au plus grande est la capacité du support. Il influence ainsi directement toutes les caractéristiques de l'appareil de lecture qui détecte et gère l'information.

Les conditions d'obtention du contraste dépendent principalement du choix du matériau. Celui-ci se présente sous la forme d'une couche mince de matière, déposée sur un substrat, l'ensemble formant le support optique. Les supports optiques d'information utilisés actuellement sont basés sur une modification particulière de ce film, la modification obtenue lors de son irradiation par la faisceau laser. Cette modification qui matérialise physiquement le bit peut être :
- le perçage du film, obtenu en vaporisant le matériau localement;
- la déformation plastique du film sous la forme d'une bulle à paroi très mince (0,03 $\mu$m d'épaisseur);
- le changement de structure du film, passant par exemple d'un état amorphe à un état cristallisé ou vice-versa.

Toutes ces modifications permettent de produire des bits de 1 $\mu$m de diamètre. Toutefois, elles présentent chacune des inconvénients qui limitent d'une manière ou d'une autre le développement de la méthode optique d'écriture/lecture.

Les deux premières modifications (formation d'un trou ou d'une bulle) nécessitent un espace libre au voisinage immédiat de la couche sensible, pour la vaporisation du matériau ou l'expansion du film. Du fait que ces modifications sont très sensibles à l'environnement (poussière, pression, température, humidité), cet espace libre doit être contrôlé et fermé, encapsulant la couche sensible et l'isolant de l'ambiant. Il en résulte que le support optique est fragile et difficile à construire, dont onéreux. De plus, le contraste optique obtenu en réflectivité spéculaire n'est que de 1,4/1.

La troisième modification possible est de nature structurelle. Elle ne nécessite pas d'encapsulation sous l'atmosphère contrôlée et, en principe, devrait être moins sensible à l'environnement que les deux précédentes. Toutefois, le contraste optique qu'elle permet d'obtenir est encore plus faible que précédemment, il est voisin de 1,25/1.

Il existe un quatrième type de modification qui est de nature chimique. Celle-ci se caractérise en effet par le fait qu'elle provoque une réaction chimique dans le film irradié. Ce procédé a été décrit dans les brevets européen n° 0 045 551 et US-A-4.463.028 en vue de son application dans le domaine de la conversion photovoltaïque de l'énergie solaire. Suivant ce procédé, on dépose sur un substrat thermiquement isolant successivement deux couches minces contenant, par exemple, respectivement des atomes d'aluminium et d'antimoine en nombres égaux. Le film résultant de l'empilement de ces deux couches a une épaisseur totale égale à 0,1 $\mu$m. On l'irradie ensuite pendant un temps très bref au moyen d'un faisceau laser de faible puissance sur une surface qui peut être réduite par focalisation à un diamètre de 1 $\mu$m. L'absorption optique de l'énergie du faisceau qui n'est pas réfléchie par la surface métallique du film génère de la chaleur qui ne peut diffuser dans le substrat isolant. Il provoque alors la fusion des couches élémentaires métalliques et la formation du composé semi-conducteur AlSb. La transmission optique de ce dernier est de l'ordre de 90 % ou davantage pour toute lumière de longueur d'onde supérieure à 750 nm. La zone irradiée du film où s'opère la synthèse devient ainsi semi-transparente alors que le reste du film garde la réflectivité élevée (75 %) de la surface métallique extérieure du film sensible, constituée d'antimoine lorsque la couche d'aluminium est déposée en premier lieu sur le substrat. Suivant ce type de modification, aucune déformation ou altération de la géométrie du film n'est provoquée. En particulier, on peut protéger le film vierge par une couche transparente à la longueur d'onde du faisceau laser de silice ou d'alumine déposée sur celui-ci dès après sa fabrication dans l'enceinte d'évaporation. A la suite de l'irradiation, le matériau transformé se trouve ainsi encapsulé entre le substrat et la couche protectrice qui reste inaltérée par la synthèse.

La présente invention a pour but de prévoir des supports optiques d'information et des ensembles formant supports optiques d'information permettant de remédier aux inconvénients précités (faible contraste, fragilité) des supports optiques d'information connus. Les supports optiques d'information de la présente invention comprennent, d'une manière générale, un substrat sous forme de plaque, deux couches superposées sur au moins une des deux faces du substrat, formant un film sensible à l'irradiation par un faisceau laser d'écriture et un faisceau laser de lecture, formées d'éléments distincts, synthétisant dans la zone d'irradiation un composé semi-conducteur permettant la lecture de l'information, ainsi qu'une couche de protection transparente laissant passer le rayonnement laser sur la surface extérieure de la couche sensible extérieure. On prévoit également des ensembles formant support optique d'information comprenant deux supports optiques d'information tels que précités.

Ces supports optiques et ensembles formant supports optiques d'information, se présentant avantageusement sous la forme de disques ou de cartes, sur lesquels l'information peut être écrite optiquement de façon personalisée et permanente, puis lue optiquement, présentent les avantages suivants :
- ils permettent la lecture de l'information avec un contraste optique supérieur à 8 et pouvant atteindre 11;
- ils sont capables de porter des capacités d'information très élevées;
- ils sont entièrement protégés de l'environnement;
- ils ont une durée de vie supérieure à 10 ans dans des conditions d'utilisation non contraignantes;
- ils sont d'une construction peu onéreuse et entièrement automatisables;
- ils peuvent être produits de façon industrielle.

A cet effet, suivant l'invention, le substrat des supports optiques est absorbant à la longueur d'onde du faisceau laser de lecture et le film sensible comprend des trous optiques (formés par la synthèse du composé semi-conducteur) à la longueur d'onde du faisceau laser de lecture, matérialisant des éléments d'écriture ou bits intégrés dans le film sensible entre le substrat absorbant et la couche de protection transparente laissant passer le rayonnement laser.

Suivant une forme de réalisation particulièrement avantageuse de l'invention, le substrat se compose d'un alliage d'aluminium anodisé et noirci, de polycarbonate noir ou transparent ou de verre de qualité optique.

Suivant une autre forme de réalisation particulièrement avantageuse de l'invention, le composé semi-conducteur est composé de deux éléments appartenant respectivement aux Groupes III et V, II et VI ou I et VI du Tableau Périodique, tels que, par exemple, AlSb, CdTe, CdSe, CuTe et $Cu_2Te$.

Les ensembles formant support optique d'information de l'invention comprennent deux supports optiques d'information superposés et assemblés par leur face ne comportant pas l'information, par l'intermédiaire ou non d'une plaque intercalaire de même géométrie que les supports, agencée entre ces derniers. On prévoit également des ensembles comprenant deux supports optiques d'information superposés et assemblés par leur face comportant l'information, par l'intermédiaire d'une plaque intercalaire de même géométrie que les supports, agencée entre ces derniers.

D'autres détails et particularités de l'invention ressortiront de la description des dessins annexés au présent mémoire et qui illustrent, à titre d'exemples non limitatifs, des formes de réalisation particulières de supports optiques d'information et d'ensembles formant supports optiques d'information suivant l'invention.

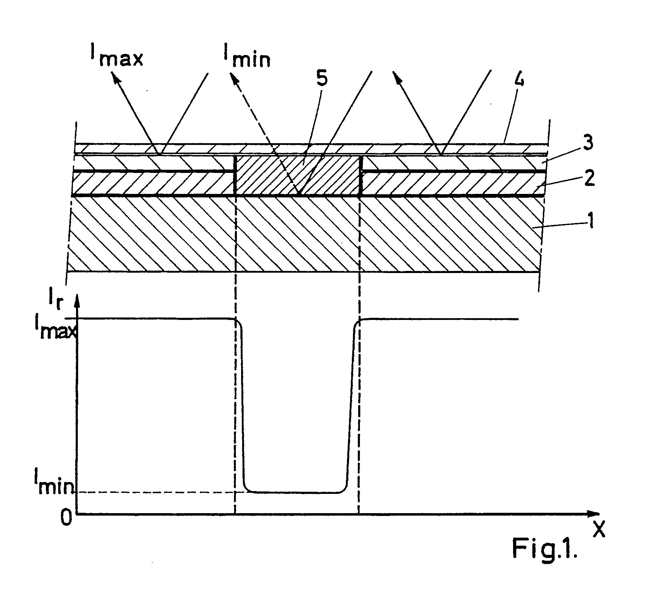

La figure 1 est une vue en coupe, schématisée d'une partie de support optique d'information suivant l'invention comportant un trou optique, irradiée par un faisceau laser de lecture et montre un graphique représentant l'intensité du courant généré sur une photodiode par le faisceau de lecture réfléchi $(I_r)$ par le support optique, en fonction de la position $(x)$ du faisceau laser sur le support.

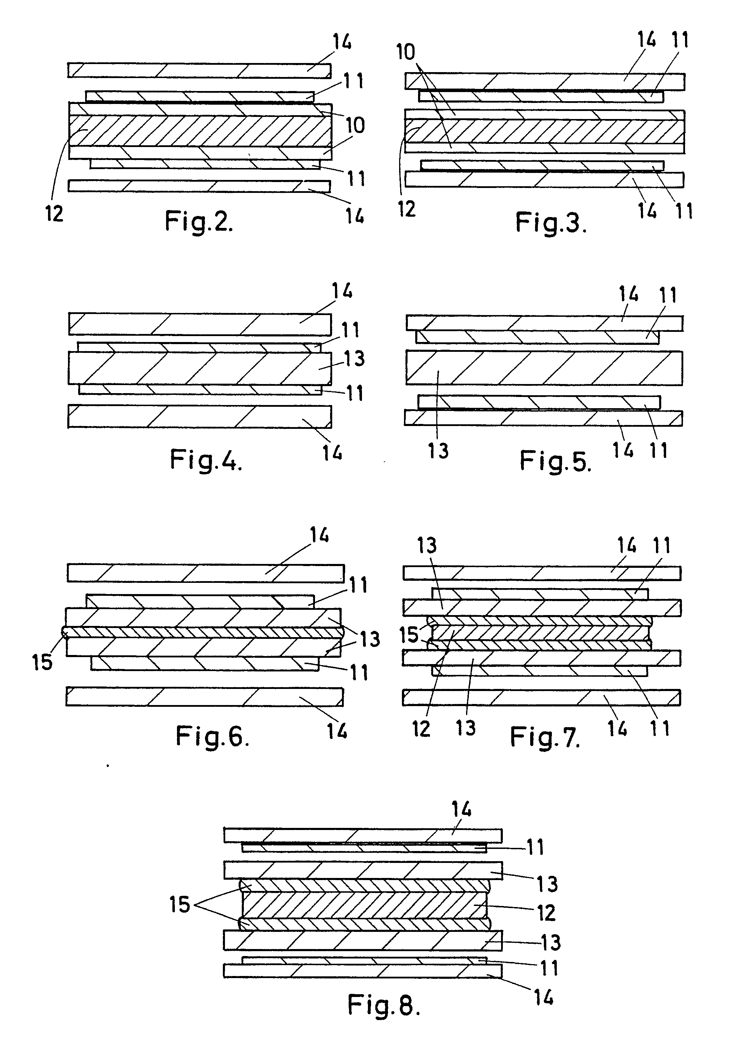

Les figures 2 à 8 sont des vues en coupe schématiques de quelques autres formes possibles de supports optiques d'information ou d'ensembles formant supports optiques d'information suivant l'invention.

Le support optique d'information partiellement représenté sur la figure 1 comprend un substrat 1 sous forme de plaque, avantageusement circulaire, rectangulaire ou carrée, deux couches superposées 2 et 3 sur une des faces du substrat, formées d'éléments distincts, synthétisant un composé semi-conducteur permettant la lecture de l'information en 5, ainsi qu'une couche de protection transparente 4 laissant passer le rayonnement laser, sur la surface extérieure de la couche extérieure 3. Suivant l'invention, comme on peut le voir sur le graphique de la figure 1, un accroissement très important du contraste de lecture en réflexion est obtenu par la synthèse du composé semi-conducteur, avantageusement formé de deux éléments appartenant respectivement aux Groupes III et V, II et VI ou I et VI du Tableau Périodique, induite par le faisceau laser d'écriture (décrite dans les brevets européen n° 0 045 551 et US-A-4.463.028) dans les couches 2 et 3 et par le dépôt de ces couches 2 et 3 sur le substrat 1, capable d'absorber la plus grande partie de l'intensité du faisceau laser de lecture. En choisissant la longueur d'onde du faisceau laser de lecture de telle façon qu'il ne soit pas ou peu absorbé par le composé semi-conducteur, ce faisceau laser traverse le film, formé des couches 2 et 3 et la couche transparente 4, uniquement dans ses zones préalablement irradiées et transformées en composé semi-conducteur avant d'atteindre l'interface entre film sensible et le substrat 1. Le contraste de lecture ($I_{max}/I_{min}$) est ainsi déterminé par la différence entre l'intensité du courant généré sur la photodiode par le faisceau de lecture réfléchi spéculairement sur la surface du matériau non transformé et vierge ($I_{max}$) et celle du même faisceau réfléchi, aussi spéculairement, sur la surface du substrat ($I_{min}$), qui est, suivant l'invention, ainsi qu'on l'a déjà précisé, un matériau absorbant ou très absorbant à la longueur d'onde du faisceau laser de lecture. La synthèse du composé semi-conducteur (par exemple AlSb) ouvre un trou optique 5 dans les couches 2 et 3, à la longueur d'onde du laser de lecture. Le substrat absorbe alors à cette longueur d'onde le rayonnement qu'il reçoit, ce qui atténue très fortement l'intensité du faisceau réfléchi sur sa surface et qui retourne vers la photodiode de lecture. L'ensemble forme ainsi un piège optique dans lequel plus de 90 % de l'intensité du faisceau de lecture incident sont absorbés. Le "bit" 5 inscrit sur le support optique se matérialise alors par un "trou noir" intégré dans les couches 2 et 3 entre le substrat 1 et la couche de protection 4.

Pour des raisons de simplicité, on peut choisir d'utiliser une même source laser (par exemple une diode laser semi-conductrice) pouvant travailler en régime pulsé pour l'écriture et en régime continu pour la lecture des bits. Pour cela, on utilise une source émettant à une longueur d'onde qui n'est pas ou est difficilement absorbée par le composé semi-conducteur synthétisé mais l'est plus facilement par le film vierge initial métallique, c'est-à-dire les couches 2 et 3. On passe alors du mode d'écriture au mode de lecture en réduisant d'un facteur de dix, par exemple, la puissance moyenne continue du laser.

Suivant l'invention, on choisit les éléments métalliques des couches 2 et 3 de manière a ce que le composé semi-conducteur qu'ils permettent de former soit transparent à la longueur d'onde du faisceau laser de lecture. Ces composés semi-conducteurs permettant de former la partie transparente du bit, tels que, par exemple, AlSb, CdTe, CdSe, CuTe et $Cu_2Te$, permettent de choisir des sources laser travaillant dans le proche infra-rouge ou le visible. On peut ainsi optimaliser le contraste de lecture $I_{max}/I_{min}$ en adaptant les caractéristiques de la diode laser d'écriture/lecture à celles du composé semi-conducteur et du substrat. Afin de réduire les pertes par réflexion lors de la phase d'écriture, on déposera de préférence sur le substrat en premier lieu la couche métallique dont la réflectivité à la longueur d'onde du laser d'écriture est la plus élevée et en second lieu la couche extérieure la moins réfléchissante.

Avantageusement, les couches 2 et 3 sont déposées sur le substrat isolant par évaporation thermique, par bombardement électronique au moyen d'un canon à électrons, ou encore par pulvérisation cathodique (sputtering) confinée par un champ magnétique (système magnétron). Dans ce dernier cas, des couches de grande surface et homogènes peuvent être préparées dans lesquelles les proportions atomiques sont respectées à quelques % près. Cette dernière technique peut également être utilisée pour le dépôt d'une couche de protection transparente 4 de 500 Å d'épaisseur. La couche de protection transparente 4, laissant passer le rayonnement laser est avantageusement formée d'alumine ou de silice. Toutes les surfaces à recouvrir sont de préférence nettoyées avant dépôt par effluage sous pression de gaz inerte.

Suivant l'invention, le substrat absorbant 1 sera avantageusement constitué par un alliage d'aluminium anodisé et noirci, du polycarbonate noir ou transparent ou encore par du verre de qualité optique (verre transparent, verre noir, etc.). Lorsque le substrat est constitué de polycarbonate noir ou transparent, une couche d'étanchéité à l'eau, par exemple formée d'alumine, peut être appliquée directement sur la surface du substrat et éventuellement sur la face libre opposée de celui-ci. Cette couche d'alumine, généralement d'une épaisseur de 100 à 150 Å, a pour but, d'une part, d'empêcher la diffusion de l'eau que pourrait contenir le polycarbonate au travers de son épaisseur pour atteindre les couches sensibles et, d'autre part, d'améliorer l'adhérence de celles-ci sur le polycarbonate. Avant l'application de ces couches d'étanchéité, on procédera au dégazage du polycarbonate pour en retirer son eau et à une opération d'étuvage, par exemple à une température de 120°C ou à une opération de dessiccation ou par tout autre moyen, pour expulser l'eau.

Pour une meilleure compréhension de l'invention, on donne ci-après un exemple d'application concret d'un procédé d'écriture/lecture d'un support optique d'information suivant l'invention. Pour cela, on utilise un disque de polycarbonate transparent revêtu d'un film mince constitué de trois couches successivement déposées, dans l'ordre de dépôt : Al (400 Å), Sb (600 Å), $Al_2O_3$ (500 Å), correspondant respectivement aux couches 2, 3 et 4 du support de la figure 1.

a) Phase d'écriture :

Ce film est localement irradié par le faisceau laser émis par une diode laser émettant à 830 nm de longueur d'onde, avec une puissance moyenne de 11 mW. Le temps d'émission de la diode, qui est le temps d'irradiation, est de $2 \times 10^{-7}$ sec. La surface irradiée a un diamètre de 1 μm après que le faisceau soit mis en forme, en traversant une optique appropriée, pour délivrer une tache lumineuse circulaire sur le film. L'angle d'incidence est de 5° par rapport à la normale à la surface du disque. Dans ces conditions d'irradiation, le faisceau, après avoir traversé la couche de $Al_2O_3$ sans pratiquement perdre d'intensité, fond les deux couches de Al et Sb et provoque leur réaction pour former le composé semi-conducteur AlSb. Ce composé est transparent à toute lumière de longueur d'onde supérieure à 780 nm.

b) Phase de lecture :

La même diode laser que précédemment est utilisée pour irradier le film. La diode laser fonctionne alors en continu avec une puissance de 1 mW. A cette puissance, le faisceau émis par la diode ne détériore pas le film. Il irradie sous un angle de 5° ce film comme précédemment. Une photodiode disposée de telle manière à recevoir le faisceau réfléchi spéculairement sur la surface. du support enregistre un courant photoélectrique dont l'intensité est proportionnelle à la puissance du faisceau réfléchi (soit 0,5 mA par mW incident sur la photodiode). Quand le faisceau laser est réfléchi ($I_r$) par une zone vierge non transformée du film, l'intensité du faisceau réfléchi qui est mesurée par la photodiode est élevée ($I_{max}$). En effet, le film est alors métallique et sa réflexion est élevée à la longueur d'onde du faisceau laser de lecture. Typiquement, pour une source émettant à 1 mW continu, la photodiode mesure alors un photocourant de 0,4 mA. Quand le faisceau laser est réfléchi ($I_r$) par une zone transformée lors de la phase d'écriture, l'intensité du faisceau réfléchi qui est alors mesurée par la photodiode ($I_{min}$) est de 0,04 mA correspondant à la puissance du faisceau laser de lecture (1 mW). Cette réduction d'un facteur de 10 sur la photodiode des courants photoélectriques mesurés lors d'une réflexion du faisceau laser de lecture sur une zone transformée (contenant le composé AlSb) par rapport à celui mesuré lors d'une réflexion sur une zone vierge est due au fait suivant. Ce composé AlSb n'absorbe pas le rayonnement émis par la diode laser à 830 nm. Ce rayonnement le traverse donc. Il atteint ensuite la surface sous-jacente du film transformé. Cette surface étant noire, elle absorbe ce rayonnement en grande partie, laissant une faible partie (de l'ordre de 6 à 7 %) être réfléchie spéculairement. Cette dernière traverse, en retour la couche d'AlSb, puis celle d'$Al_2O_3$ avant d'atteindre la photodiode où elle génère un courant photoélectrique proportionnel à son intensité ($I_{min}$). En mode opérationnel, écriture et lecture sont réalisées en régime cinétique. L'écriture est obtenue en déclenchant électroniquement l'émission du faisceau laser de la diode laser. Ce déclenchement dure $2 \times 10^{-7}$ secondes. Il est répété à des intervalles de temps variés, suivant un code préétabli et simulant une écriture en mode binaire. L'irradiation du film s'opère alors que le disque portant le film sensible tourne à une vitesse de 1000 tours/minute et que le support portant la diode laser et la photodiode de lecture se déplace radialement dans un mouvement linéaire centrifuge par rapport au disque. Les zones irradiées par le laser sont ainsi distribuées le long d'une spirale, de pas de 3 μm. La distance minimum entre deux zones irradiées successivement et voisines sur la piste est de 3 μm aussi. Dans la phase de lecture, la diode laser fonctionnant en continu, éclaire continuellement la piste. La photodiode de lecture enregistre alors le passage sous le faisceau laser d'une zone transformée lorsque l'intensité du photocourant qu'elle détecte chute de 0,4 mA à 0,04 mA. Le rapport de ces deux quantités mesure le contraste de lecture ($I_{max}/I_{min}$), qui dans cet exemple égale 10/1. L'enregistrement du photocourant de la photodiode, simultanément à la rotation du disque, d'une part, et du déplacement radial linéaire de la photodiode, d'autre part, permet ainsi de transcrire l'information codée inscrite dans la phase d'écriture sur le disque en restituant cette information sous la forme d'une suite d'impulsions photoélectriques aux bornes de la photodiode. Cette suite est alors prête à être décodée électroniquement pour permettre la lecture de l'information.

Ainsi qu'on l'a déjà précisé précédemment, le substrat des supports optiques d'information et des ensembles formant supports optiques d'information de l'invention est absorbant à la longueur d'onde du faisceau laser de lecture. Grâce à l'utilisation de ce substrat absorbant, les films sensibles à l'irradiation par le faisceau laser d'écriture permettent la lecture de l'information avec un contraste optique supérieur à 8 et pouvant atteindre 11. Ainsi qu'on l'a déjà précisé, les supports optiques d'information et ensembles formant supports optiques d'information de l'invention sont capables de porter des capacités d'information très élevées. Elles peuvent atteindre 30 GBits sur un disque de 35 cm de diamètre, et d'une manière générale 10 MBits par cm².

Des exemples concrets de quelques structures possibles de supports optiques d'information et d'ensembles formant supports optiques d'information sont donnés ci-après et illustrés par les figures 2 à 7.

## Exemple 1 (voir figure 2)

Un disque d'alliage d'aluminium poli (qualité optique) est recouvert d'une couche d'alumine de 15 μm d'épaisseur, par anodisation. La couche d'aluminium obtenue est totalement transparente. La surface est ponctuée de trous colonnaires, de 0,03 μm de diamètre, distants de 0,5 μm en moyenne, et profonds de 5 à 10 μm. Un dépôt d'étain est alors réalisé sur cet oxyde par voie chimique. L'étain se loge au fond des trous et, suivant la durée du dépôt, un nombre important de ces trous se trouvent occupés par l'étain donnant une coloration noire au disque d'alliage d'aluminium anodisé. Sur ce substrat isolant thermique et anti-réfléchissant, on dépose ensuite successivement une couche de 0,04 μm d'aluminium, puis une couche de 0,06 μm d'antimoine, et enfin une couche de 0,05 μm d'alumine ou de silice, constituant la couche de protection. Le support optique est alors terminé. On peut encore avantageusement améliorer l'isolation des couches sensibles en déposant sur la couche d'alumine ou de silice un film polymère très mince de polycarbonate transparent, par pulvérisation à la température ambiante.

## Exemple 2 (voir figure 3)

Un disque en polycarbonate transparent et d'épaisseur de 1 mm (fini optique de la surface) est revêtu sur une de ses faces d'un film constitué des trous couches dont question dans l'Exemple 1, à savoir successivement Sb, Al puis SiO₂ ou Al₂O₃ dans les épaisseurs indiquées. Un deuxième disque est préparé de façon identique. Enfin, on fabrique un disque d'alliage d'aluminium anodisé et noirci comme dans l'Exemple 1. Les deux disques en polycarbonate préalablement fabriqués sont alors appliqués de part et d'autre du disque d'alliage d'aluminium noirci, avec leur face revêtue du film au contact du disque métallique. Dans cet exemple, les disques en polycarbonate protègent totalement la couche sensible après scellement des trois disques ensemble sur leur périphérie et sur leur diamètre intérieur par des moyens connus en pratique.

## Exemple 3 (voir figure 4)

On fabrique un disque (d'une épaisseur supérieure ou égale à 1 mm) en polycarbonate coloré en noir par adjonction d'un colorant organique. Chacune de ses deux faces est ensuite recouverte d'un film sensible constitué successivement et, à partir du substrat, de couches d'Al, de Sb puis d'Al₂O₃. Le disque obtenu est alors intercalé entre deux disques de polycarbonate transparent de même diamètre et de même épaisseur, et le tout est scellé sur les diamètres intérieur et extérieur.

## Exemple 4 (voir figure 5)

Un disque en polycarbonate transparent et d'épaisseur de 1 mm est revêtu sur une de ses faces d'un film sensible constitué successivement et à partir du substrat de trois couches de Sb, d'Al, et de Al₂O₃. Un deuxième disque est préparé de façon identique. Enfin, on fabrique un disque de polycarbonate noir. Les deux disques de polycarbonate transparent préalablement fabriqués sont alors appliqués de part et d'autre du disque de polycarbonate noir avec leur face revêtue du film au contact du disque de polycarbonate noir.

## Exemple 5 (voir figure 6)

Deux disques en polycarbonate coloré en noir sont habillés sur une seule de leurs faces d'un film sensible constitué, successivement et à partir du substrat, de trois couches d'Al, de Sb et d'Al₂O₃. Ils sont ensuite assemblés en les collant ensemble par leur face non recouverte. L'ensemble est ensuite intercalé entre deux disques de polycarbonate transparent et scellé sur les diamètres intérieur et extérieur.

## Exemple 6 (voir figure 7)

Deux disques en polycarbonate coloré en noir sont habillés sur une seule de leurs faces comme précédemment, à savoir successivement et à partir du substrat de trois couches d'Al, de Sb et d'Al₂O₃. Ils sont ensuite collés par leur face non habillée de chaque côté d'un disque d'aluminium ou d'alliage d'aluminium d'une épaisseur égale à 1 mm. L'ensemble est ensuite intercalé entre deux disques de polycarbonate transparent et scellé comme précédemment.

## Exemple 7 (voir figure 8)

Deux disques en polycarbonate transparent sont habillés sur une seule de leurs faces d'un film sensible constitué, à partir du substrat de trois couches de Sb, d'Al et d'Al$_2$O$_3$. On prépare alors une structure formée d'un disque d'aluminium ou d'alliage d'aluminium sur lequel on a collé de part et d'autre deux disques de polycarbonate noir. On pourrait également préparer une structure formée d'un disque de polycarbonate noir. Les deux disques en polycarbonate transparent préalablement fabriqués sont alors appliqués de part et d'autre de cette structure avec leur face habillée du film sensible au contact des disques en polycarbonate noir.

Les références numériques apparaissant aux figures 3 à 9 ont la signification suivante :

10 : Anodisation teintée noire.

11 : Film sensible = couches métalliques · plus couche de protection transparente.

12 : Aluminium massif.

13 : Polycarbonate noir.

14 : Polycarbonate transparent.

15 : Colle.

## Revendications

1. Support optique d'information comprenant un substrat (1) sous forme de plaque, deux couches superposées (2, 3) sur au moins une des deux faces du substrat (1), formant un film sensible à l'irradiation par un faisceau laser d'écriture et un faisceau laser de lecture, formées d'éléments distincts, synthétisant dans la zone d'irradiation un composé semi-conducteur permettant la lecture de l'information, ainsi qu'une couche de protection transparente (4) laissant passer le rayonnement laser sur la surface extérieure de la couche extérieure (3), caractérisé en ce que le substrat (1) est absorbant à la longueur d'onde du faisceau laser de lecture et en ce que le film sensible comprend des trous optiques (5) (formés par la synthèse du composé semi-conducteur) à la longueur d'onde du faisceau laser de lecture, matérialisant des éléments d'écriture ou bits intégrés dans le film sensible entre le substrat absorbant (1) et la couche de protection (4) (figure 1).

2. Support optique suivant la revendication 1, caractérisé en ce que le substrat est constitué d'un alliage d'aluminium anodisé et noirci.

3. Support optique suivant la revendication 1, caractérisé en ce que le substrat est composé de polycarbonate noir ou de polycarbonate transparent.

4. Support optique suivant la revendication 3, caractérisé en ce que le substrat comporte sur au moins une de ses faces une couche d'étanchéité à l'eau, empêchant la diffusion d'eau vers le film sensible précité.

5. Support optique suivant la revendication 1, caractérisé en ce que le substrat est formé de verre de qualité optique.

6. Support optique suivant l'une quelconque des revendications 1 à 5, caractérisé en ce que le film sensible permet la lecture de l'information avec un contraste optique de l'ordre de 8 à 11.

7. Support optique suivant l'une quelconque des revendications 1 à 6, caractérisé en ce que le composé semi-conducteur est composé de deux éléments appartenant respectivement aux Groupes III et V, II et VI ou I et VI du Tableau Périodique.

8. Support optique suivant la revendication 7, caractérisé en ce que le composé semi-conducteur est un composé du groupe comprenant AlSb, CdTe, CdSe, CuTe et Cu$_2$Te.

9. Support optique suivant l'une quelconque des revendications 1 à 8, caractérisé en ce que la couche de protection transparente (4) est formée d'alumine ou de silice.

10. Support optique suivant l'une quelconque des revendications 1 à 9, caractérisé en ce qu'il comprend sur au moins une de ses faces extérieures un revêtement isolant transparent.

11. Support optique suivant la revendication 10, caractérisé en ce que le revêtement isolant est du polycarbonate transparent.

12. Support optique suivant l'une quelconque des revendications 1 à 11, caractérisé en ce qu'il porte des capacités d'information atteignant 10 MBits par cm$^2$.

13. Support optique suivant l'une quelconque des revendications 1 à 12, caractérisé en ce qu'il est sous la forme d'une plaque circulaire, rectangulaire ou carrée.

14. Ensemble formant support optique d'information, caractérisé en ce qu'il comprend deux supports optiques d'information suivant la revendication 1, superposés et assemblés par leur face ne comportant pas l'information (figure 6).

15. Ensemble formant support optique d'information, caractérisé en ce qu'il comprend deux supports optiques d'information suivant la revendication 1, superposés et assemblés par leur face ne comportant pas d'information par l'intermédiaire d'une plaque intercalaire agencée entre les supports précités (figure 7).

16. Ensemble suivant la revendication 15, caractérisé en ce que la plaque intercalaire est formée d'aluminium, d'alliage d'aluminium ou de polycarbonate noir.

17. Ensemble suivant l'une quelconque des revendications 14 à 16, caractérisé en ce qu'il comporte sur chacune de ses faces extérieures un revêtement isolant transparent.

18. Ensemble suivant la revendication 17, caractérisé en ce que le revêtement isolant est formé de polycarbonate transparent.

19. Ensemble formant support optique d'information, caractérisé en ce qu'il comprend deux supports optiques d'information suivant la revendication 1, superposés et assemblés par leur face comportant l'information par l'intermédiaire d'une plaque intercalaire agencée entre les supports précités (figure 8).

20. Ensemble suivant la revendication 19, caractérisé en ce que la plaque intercalaire est constituée d'une plaque d'aluminium ou d'alliage d'aluminium revêtue sur chacune de ses faces d'une plaque de polycarbonate noir.

21. Ensemble suivant l'une quelconque des revendications 14 à 20, caractérisé en ce qu'il se présente sous la forme d'une plaque circulaire, rectangulaire ou carrée.

Fig.1.

**Fig.2.**

**Fig.3.**

**Fig.4.**

**Fig.5.**

**Fig.6.**

**Fig.7.**

**Fig.8.**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | IBM TECHNICAL DISCLOSURE BULLETIN. vol. 27, no. 7b, décembre 1984, NEW YORK US page 4365 G.J.Clark & C.Ortiz: "Phase-transformation based optical storage" * le document en entier * | 1, 7, 8, 12 | G11B7/24 G11B7/00 |
| A | EP-A-0150829 (KABUSHIKI KAISHA TOSHIBA) * page 3, lignes 7 - 11; revendications 1, 5-7; figure 8 * | 1, 3, 4, 7, 13, 14 | |
| A | PATENT ABSTRACTS OF JAPAN vol. 8, no. 141 (P-283)(1578) 30 juin 1984, & JP-A-59 038948 (HITACHI SEISAKUSHO K.K.) 3 mars 1984, * le document en entier * | 15, 21 | |

DOMAINES TECHNIQUES RECHERCHES (Int. Cl.5 )

G11B

Le présent rapport a été établi pour toutes les revendications

| Lieu de la recherche | Date d'achèvement de la recherche | Examinateur |
|---|---|---|
| BERLIN | 15 NOVEMBRE 1989 | GERARD E.A.S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)